(19) Europäisches Patentamt

European Patent Office

Office européen des brevets

(11) **EP 1 333 108 B1**

(12) **EUROPEAN PATENT SPECIFICATION**

(45) Date of publication and mention
of the grant of the patent:
**27.09.2006 Bulletin 2006/39**

(51) Int Cl.:
*C23F 11/10* (2006.01)    *E21B 41/02* (2006.01)

(21) Application number: **03001708.1**

(22) Date of filing: **27.01.2003**

(54) **Corrosion inhibitors for the petroleum industry**

Korrosionsinhibitoren für die Erdölindustrie

Inhibiteurs de la corrosion pour l'industrie pétrolière

(84) Designated Contracting States:
**AT BE BG CH CY CZ DE DK EE ES FI FR GB GR HU IE IT LI LU MC NL PT SE SI SK TR**

(30) Priority: **01.02.2002 IT VA20020009**

(43) Date of publication of application:
**06.08.2003 Bulletin 2003/32**

(73) Proprietor: **LAMBERTI S.p.A.**
**21041 Albizzate (Varese) (IT)**

(72) Inventors:
 • **McGregor, William,**
   **c/oLamberti SpA**
   **21041 Albizzate (VA) (IT)**
 • **Li Bassi, Guiseppe,**
   **c/oLamberti SpA**
   **21041 Albizzate (VA) (IT)**

(56) References cited:
 **US-A- 3 846 071        US-A- 4 311 662**
 **US-A- 5 393 464        US-A- 5 611 992**
 **US-A- 5 785 895**

**Description**

The present invention relates to corrosion inhibitors which are useful for the protection of metal parts in contact with aqueous media in the petroleum industry.

Corrosion of metal parts and surfaces exposed to aqueous media has always been a difficult problem.

The necessity of effectively inhibiting corrosion is particularly felt in oil exploration, production and refining, onshore and off-shore, where corrosion inhibitors need to be used to inhibit corrosion of metal surfaces in contact with water or oil industry fluids containing oil or water.

One particularly problem of note is that of the ecotoxicity of the products used as corrosion inhibitors.

Therefore it is essential to use corrosion inhibitors which are active at a concentration that does not harm the living organisms present in the natural environment in which they are used.

Corrosive environments normally encountered in oil wells may be anaerobic or aerobic and may contain "sour" (containing hydrogen sulphide) or "sweet" (containing carbon dioxide) corrosive components. Many corrosion inhibitors are known and numerous patents have been filed which describe techniques or products which can be used to this end.

In general the choice of corrosion inhibitors used varies according to the nature of the corrosive environment.

In the patent literature inhibitor compositions are often based on amines, amides or imidazolines, often in combination with other types of inhibitor, including alkoxylated phosphate esters.

Without completely summarising the patent literature, by way of example we can cite US 5,785,895, US 3,846,071, US 4,311,662, EP 567,212 and EP 651,074.

US 5,785,895 describes a method for inhibiting corrosion and corrosion inhibitors for oil and gas wells useful for protecting the metal parts in contact with aqueous media in a sweet corrosive environment comprising a 1,2 substituted imidazoline, the 1-substituent having from one to thirty ethylene oxide units and the 2-substituent being an unsaturated or polyunsaturated fatty chain having from six to about thirty carbon atoms, and a phosphate ester of a linear alcohol having from about two to thirty carbon atoms, ethoxylated with from one to about ten moles of ethylene oxide.

We have now found that using a mix of a 1,2-substituted imidazoline and a phosphate ester of a branched ethoxylated polyol it is possible to obtain an effective corrosion protection of the metal surfaces that are in contact with water or oil industry fluids containing oil or water, in such that the mixture is particularly active even at low concentrations.

In a fundamental aspect of the invention, the corrosion inhibitors for oil wells consist of a mixture containing

(a) from 15 to 35% in weight, and preferably from 20 to 30% in weight, of a 1,2-substituted imidazoline, the 1-substituent having from 3 to 10, and preferably from 4 to 8 ethylene oxide units, and the 2-substituent being an unsaturated or polyunsaturated fatty chain having from 6 to 20 carbon atoms;

(b) from 1 to 10% in weight, and preferably from 2 to 6% in weight, of a phosphate ester of a branched polyol having from 4 to 8 carbon atoms and containing from 3 to 10, and preferably from 3 to 6 hydroxyl groups, ethoxylated with from 3 to 10 moles of ethylene oxide, and preferably from 3 to 8 moles of ethylene oxide;

(c) from 50 to 80% in weight of water;

(d) optionally from 15 to 20% in weight of an alcohol, or glycol, or mixture thereof.

The 1,2-substituted imidazoline may be prepared by reacting an N-substituted ethylene diamine with a fatty acid to form an imidazoline and ethoxylating the imidazoline as necessary.

The N-substituted ethylene diamine is of the formula $H_2NCH_2CH_2NH(-R-XH)$, wherein -R- is a hydrocarbon chain and -XH represents a terminal group that includes a hetero atom such as oxygen, nitrogen or sulphur and at least one hydrogen.

The -XH group provides an attachment point for ethylene oxide to the polyether.

Preferred N-substituted ethylene diamines are $NH_2CH_2CH_2NHCH_2CH_2OH$ and $NH_2CH_2CH_2NHCH_2CH(CH_3)OH$.

The preferred fatty acids are mono- or poly-unsaturated fatty acids. Most preferably the fatty acid is oleic acid.

The N-substituted ethylene diamine and fatty acid are reacted in about a 1:1 molar ratio with heating, between 180-240 °C, until all reaction water is distilled off.

The resulting imidazoline is then ethoxylated as desired.

The phosphate ester of a branched ethoxylated polyol is prepared using standard techniques in organic synthesis, for example as described in US 4,311,662, in which a synthesis is described through reaction of polyphosphoric acid with an ethoxylated polyol.

Preferably the phosphate ester is obtained by reacting a branched alkoxylkated polyol with 0.5 to 2 moles, preferably 0.6 to 1.5 moles, of polyphosphoric acid per mole of hydroxyl groups.

Preferably the branched alkoxylkated polyol is commercially available ethoxylated pentaerythrite.

The corrosion inhibitors in the present invention are preferably aqueous solutions or dispersions.

The solvent may be an alcohol, in a weight ration from 3:1 to 1:3, preferred alcohols being linear or branched

aliphatic $C_2$-$C_4$ alcohols, for example isopropanol or n-butanol; alternatively the solvent may be a glycol, preferred glycols being ethylene glycol or propylene glycol.

The corrosion inhibitors, according to the present invention, are particularly suitable for the protection of metals in environments containing carbon dioxide as is amply demonstrated in the examples which follow.

The composition may be used by simple addition to the aqueous medium to be treated.

These water-based corrosion inhibitors for oil wells, according to the present invention, are sufficiently powerful that effective corrosion inhibition can be achieved with a dosage of 5 to 500 ppm by weight, in relation to the fluid to be treated.

In the present description with the expression "active component" we mean: the 1,2-substituted imidazoline, the phosphate esters of ethoxylated polyol, and the salts of the latter.

The following abbreviations are used in the examples to represent the active components under examination:

| | |
|---|---|
| FI = | reaction product from oleic acid and aminoethyl ethanolamine |
| FI xEO = | FI, ethoxylated with x equivalents of ethylene oxide |
| PP = | ethoxylated pentaerythrite, phosphate ester, acid form (acid form of the commercial product, Inicor 404/K, produced by Lamberti SpA) |
| PPS = | ethoxylated pentaerythrite, phosphate ester, potassium salt (commercial product, Inicor 404/K, produced by Lamberti SpA) |
| LAP = | ethoxylated $C_{12\text{-}15}$ alcohol, phosphate ester, acid form (commercial product, Chimin P1A, produced by Lamberti SpA) |
| LAPS = | sodium salt of LAP (commercial product, Chimin P1, produced by Lamberti SpA) |

Tests were performed in 200ml sealed bottles, containing 150ml of 10% aq. sodium chloride, saturated with carbon dioxide and dosed with the anticorrosive composition under test, and containing a mild steel test coupon.

Before use, each coupon was washed with acetone, then 3% hydrochloric acid, then 10% aq. sodium bicarbonate, then acetone, dried and accurately weighed.

Some bottles contained no anticorrosive composition to give a reference measure of the average uninhibited corrosion rate.

The bottles containing the test materials were mechanically rotated inside a suitably equipped oven at 70°C for 16 hours.

Afterwards, the coupons were cleaned with steel wool, washed with acetone, dried and weighed again.

The percentage of weight loss with anticorrosive (B) and the percentage of weight loss without anticorrosive (A) allows the calculation of :

$$\% \text{ protection} = 100 - (100 \text{ x}) \, B \,/\, A.$$

Moreover, a reference commercially available corrosion inhibitor (Inicor W481 available from Lamberti SpA) was dosed at 300ppm in several bottles and the average % protection for this reference product was mathematically normalised to 100 nominal protection units. All the results of the corrosion tests (% of protection) were multiplied by the same experimental factor used to normalise the percentage of protection of the reference product. The Nominal Protection values for the anticorrosive compositions at varying dosages were thus obtained.

The corrosion tests were performed at 8 different dosages from 6 to 1500 ppm of active components. Further, the curves of Nominal Protection against Dosage were smoothed by a logarithmic method (in Microsoft Excel® ) to give best-fit corrosion protection-dosage curves.

In the following examples, various compositions were prepared and tested, each containing 30% by weight of active components in water (Example 1) or water/isopropanol 1:1 (Examples 2-6).

In Examples 2-6 the the number of molar equivalents of the active components were determined by acid-base titration.

EXAMPLE 1 (for comparison only)

Two series of solutions, one containing LAPS and another containing PPS, at different dosages, were prepared and tested.

From the experimental results displayed in Table 1 (experimental results at all dosages) it is clear that LAPS gives better corrosion protection than PPS.

Table 1.

| | Nominal Protection at : | | | | | | | |
|---|---|---|---|---|---|---|---|---|
| | **6 ppm** | **15 ppm** | **30 ppm** | **60 ppm** | **150 ppm** | **300 ppm** | **600 ppm** | **1500 ppm** |
| **PPS** | 48 | 52 | 68 | 69 | 78 | 74 | 77 | 85 |
| **LAPS** | 72 | 53 | 71 | 83 | 83 | 78 | 78 | 102 |

EXAMPLE 2 (for comparison only)

The corrosion testing, as described above, was performed on two series of solutions, one containing FI / LAP (1:1 in molar equivalents) and another containing FI / PP (1:1 in molar equivalents) at various dosages. The results obtained are reported in Table 2; it can be observed that the binary composition FI/LAP gives better corrosion protection than binary composition FI/PP.

Table 2.

| | Nominal Protection at : | | | | | | | |
|---|---|---|---|---|---|---|---|---|
| | **6 ppm** | **15 ppm** | **30 ppm** | **60 ppm** | **150 ppm** | **300 ppm** | **600 ppm** | **1500 ppm** |
| **FI/PP** | 60 | 58 | 62 | 57 | 60 | 62 | 72 | 98 |
| **FI/LAP** | 66 | 71 | 80 | 86 | 82 | 85 | 85 | 91 |

EXAMPLE 3 (for comparison only)

The corrosion testing, as described above, was performed on two series of solutions, one containing FI 3EO/LAP (1:1 in molar equivalents) and another containing FI 3EO/PP (1:1 in molar equivalents) at various dosages.
The results obtained are reported in Table 3.

Table 3

| | Nominal Protection at : | | | | | | | |
|---|---|---|---|---|---|---|---|---|
| | **6 ppm** | **15 ppm** | **30 ppm** | **60 ppm** | **150 ppm** | **300 ppm** | **600 ppm** | **1500 ppm** |
| **FI 3EO/PP** | 77 | 83 | 77 | 84 | 88 | 90 | 83 | 84 |
| **FI 3EO/LAP** | 50 | 82 | 86 | 90 | 95 | 95 | 99 | 103 |

EXAMPLE 4 (for comparison only)

The corrosion testing, as described above, was performed on two series of solutions, one containing FI 17EO/LAP (1:1 in molar equivalents) and another containing FI 17EO/PP (1:1 in molar equivalents) at various dosages. The results obtained are reported in Table 4.

Table 4

| | Nominal Protection at : | | | | | | | |
|---|---|---|---|---|---|---|---|---|
| | **6 ppm** | **15 ppm** | **30 ppm** | **60 ppm** | **150 ppm** | **300 ppm** | **600 ppm** | **1500 ppm** |
| **FI 17EO/PP** | 80 | 75 | 79 | 95 | 94 | 98 | 95 | 100 |
| **FI 17EO/LAP** | 73 | 74 | 81 | 90 | 97 | 98 | 99 | 108 |

EXAMPLE 5

The corrosion testing, as described above, was performed on two series of solutions, one containing FI 7EO/LAP (1:1 in molar equivalents) and another containing FI 7EO/PP (1:1 in molar equivalents) at various dosages. The results obtained are reported in Table 5.

Table 5.

| | Nominal Protection at : | | | | | | | |
|---|---|---|---|---|---|---|---|---|
| | 6 ppm | 15 ppm | 30 ppm | 60 ppm | 150 ppm | 300 ppm | 600 ppm | 1500 ppm |
| FI 7EO/PP | 74 | 84 | 80 | 87 | 93 | 96 | 93 | 88 |
| FI 7EO/LAP | 57 | 73 | 73 | 81 | 88 | 89 | 97 | 106 |

EXAMPLE 6

The corrosion testing, as described above, was performed on two series of solutions, one containing FI 5EO/LAP (1:1 in molar equivalents) and another containing FI 5EO/PP (1:1 in molar equivalents) at various dosages. The results obtained are reported in Table 6.

Table 6.

| | Nominal Protection at : | | | | | | | |
|---|---|---|---|---|---|---|---|---|
| | 6 ppm | 15 ppm | 30 ppm | 60 ppm | 150 ppm | 300 ppm | 600 ppm | 1500 ppm |
| FI 5EO/PP | 81 | 80 | 86 | 88 | 97 | 96 | 96 | 98 |
| FI 5EO/LAP | 52 | 82 | 74 | 83 | 88 | 94 | 92 | 90 |

The examples show that phosphate ester of ethoxylated linear alcohol gives better corrosion protection than phosphate ester of ethoxylated branched polyol (Example 1); moreover also the mix of phosphate ester of ethoxylated linear alcohol with a 1,2-substituted imidazoline is more effective than the mix of phosphate ester of ethoxylated branched polyol with a 1,2-substituted imidazoline (Example 2).

Unexpectedly, the anticorrosive mixtures of the present invention, that is a mix of ethoxylated 1,2-substituted imidazoline with a phosphate ester of ethoxylated branched polyol, show better anticorrosion protection than those mixtures containing ethoxylated 1,2-substituted imidazoline with a phosphate ester of ethoxylated linear alcohol, especially at low dosages. As previously noted, low dosages are preferred from a practical point of view as this allows a notable reduction in the ecotoxicity of the anticorrosion treatment.

## Claims

1.  Corrosion inhibitors for oil and gas wells consisting of a mixture containing

    (a) from 15 to 35% in weight of a 1,2-subsitutued imidazoline, the 1-substituent having from 5 to 7 ethylene oxide units and the 2-substituent being an unsaturated or polyunsaturated fatty chain having from 6 to 20 carbon atoms;
    (b) from 1 to 10% in weight of a phosphate ester of a branched polyol having from 4 to a 8 carbon atoms and containing from 3 to 10 hydroxyl groups, ethoxylated with from 3 to 10 moles of ethylene oxide;
    (c) from 50 to 80% in weight of water;
    (d)optionally from 15 to 20% in weight of an alcohol, or glycol, or mixture thereof.

2.  Corrosion inhibitors for oil and gas wells according to Claim 1 containing from 20 to 30% of said 1,2-subsitutued imidazoline.

3.  Corrosion inhibitors for oil and gas wells according to Claim 1 containing 2 to 6% of said phosphate ester.

4.  Corrosion inhibitors for oil and gas wells according to Claim 1 **characterised by** the fact that the ethoxylated branched polyol contains from 3 to 6 hydroxyl groups.

5.  Corrosion inhibitors for oil and gas wells according to Claim 1 **characterised by** the fact that the ethoxylated branched polyol is esterified with from 0.5 to 2 molar equivalents of polyphosphoric acid per mole of hydroxyl groups.

6. Corrosion inhibitors for oil and gas wells according to Claim 1 **characterised by** the fact that the ethoxylated branched polyol is esterified with from 0.6 to 1.5 molar equivalents of polyphosphoric acid per mole of hydroxyl groups.

7. Corrosion inhibitors for oil and gas wells according to Claim 1 **characterised by** the fact that the ethoxylated branched polyol is ethoxylated with from 3 to 8 moles of ethylene oxide.

8. Corrosion inhibitors for oil and gas wells according to Claim 1 **characterised by** the fact that said alcohols and glycols are isopropanol, n-butanol, ethylene glycol, propylene glycol, or mixtures thereof.

9. Process for inhibiting corrosion in aqueous media in oil and gas wells **characterised by** the fact that between 5 and 300 ppm in weight of the corrosion inhibitors according to Claim 1 is used.

10. Process for inhibiting corrosion in aqueous media in oil and gas wells according to Claim 9 when carbon dioxide is present.


**Patentansprüche**

1. Korrosionsschutzmittel für Öl- und Gasbohrlöcher, bestehend aus einer Mischung aus

   (a) 15 bis 35% Gewichtsanteilen eines 1,2-substituierten Imidazolins, wobei der 1-Substituent zwischen 5 und 7 Äthylenoxidgruppen besitzt und der 2-Substituent aus einer ungesättigten oder polyungesättigten Fettsäurekette mit 6 bis 20 Kohlenstoffatomen besteht;
   (b) 1 bis 10% Gewichtsanteilen eines Phosphatesters eines verzweigten Polyols mit 4 bis 8 Kohlenstoffatomen und 3 bis 10 Hydroxylgruppen, die mit 3 bis 10 Mol Äthylenoxyd ethoxyliert sind.
   (c) 50 bis 80% Gewichtsanteilen Wasser;
   (d) optional 15 bis 20% Gewichtsanteilen Alkohol, oder Glykol, oder einer Mischung aus diesen.

2. Korrosionsschutzmittel für Öl- und Gasbohrlöcher entsprechend Patentanspruch 1, 20 bis 30% Gewichtsanteile des besagten 1,2-substituierten Imidazolins enthaltend.

3. Korrosionsschutzmittel für Öl- und Gasbohrlöcher entsprechend Patentanspruch 1., 2 bis 6% Gewichtsanteile des besagten Phosphatesters enthaltend.

4. Korrosionsschutzmittel für Öl- und Gasbohrlöcher entsprechend Patentanspruch 1., **dadurch gekennzeichnet, dass** das ethoxylierte verzweigte Polyol 3 bis 6 Hydroxylgruppen enthält.

5. Korrosionsschutzmittel für Öl- und Gasbohrlöcher entsprechend Patentanspruch 1., **dadurch gekennzeichnet, dass** das ethoxylierte verzweigte Polyol mit 0.5 bis 2 molaren Äquivalenten von Polyphosphorsäure pro Mol Hydroxylgruppen esterifiziert ist.

6. Korrosionsschutzmittel für Öl- und Gasbohrlöcher entsprechend Patentanspruch 1., **dadurch gekennzeichnet, dass** das ethoxylierte verzweigte Polyol mit 0.6 bis 1.5 molaren Äquivalenten von Polyphosphorsäure pro Mol Hydroxylgruppen esterifiziert ist.

7. Korrosionsschutzmittel für Öl- und Gasbohrlöcher entsprechend Patentanspruch 1., **dadurch gekennzeichnet, dass** das ethoxylierte verzweigte Polyol mit 3 bis 8 Mol Äthylenoxyd ethoxyliert ist.

8. Korrosionsschutzmittel für Öl- und Gasbohrlöcher entsprechend Patentanspruch 1., **dadurch gekennzeichnet, dass** die besagten Alkohole und Glykole aus Isopropanol, n-Butanol, Äthylenglykol, Propylenglykol oder Mischungen aus diesen bestehen.

9. Korrosionsschutzprozess in wässriger Umgebung für Öl- und Gasbohrlöcher, **dadurch gekennzeichnet, dass** zwischen 5 und 300-6% Gewichtsanteile des Korrosionsschutzmittels entsprechend Patentanspruch 1 verwendet werden wird.

10. Korrosionsschutzprozess in wässriger Umgebung für Öl- und Gasbohrlöcher entsprechend Patentanspruch 9, wenn Kohlendioxid vorhanden ist.

**Revendications**

1. Inhibiteurs de corrosion pour puits de gaz et de pétrole, consistant en un mélange contenant

   (a) de 15 à 35 % en poids d'une imidazoline 1,2-substituée, le substituant en 1-ayant de 5 à 7 unités d'oxyde d'éthylène, et le substituant en 2- étant une chaîne grasse insaturée ou polyinsaturée ayant de 6 à 20 atomes de carbone ;
   (b) de 1 à 10 % en poids d'un ester phosphaté d'un polyol ramifié ayant de 4 à 8 atomes de carbone et contenant de 3 à 10 groupes hydroxyle, éthoxylé par 3 à 10 moles d'oxyde d'éthylène ;
   (c) de 50 à 80 % en poids d'eau ;
   (d) éventuellement, de 15 à 20 % en poids d'un alcool, glycol ou d'un de leurs mélanges.

2. Inhibiteurs de corrosion pour puits de gaz et de pétrole selon la revendication 1 contenant de 20 à 30 % en poids de ladite imidazoline 1,2-substituée.

3. Inhibiteurs de corrosion pour puits de gaz et de pétrole selon la revendication 1, contenant de 2 à 6 % en poids dudit ester phosphaté.

4. Inhibiteurs de corrosion pour puits de gaz et de pétrole selon la revendication 1, **caractérisés en ce que** le polyol ramifié éthoxylé contient de 3 à 6 groupes hydroxyle.

5. Inhibiteurs de corrosion pour puits de gaz et de pétrole selon la revendication 1, **caractérisés en ce que** le polyol ramifié éthoxylé est estérifié au moyen de 0,5 à 2 équivalents molaires d'acide phosphorique par mole de groupes hydroxyle.

6. Inhibiteurs de corrosion pour puits de gaz et de pétrole selon la revendication 1, **caractérisés en ce que** le polyol ramifié éthoxylé est estérifié au moyen de 0,6 à 1,5 équivalents molaires d'acide phosphorique par mole de groupes hydroxyle.

7. Inhibiteurs de corrosion pour puits de gaz et de pétrole selon la revendication 1, **caractérisés en ce que** le polyol ramifié éthoxylé est éthoxylé au moyen de 3 à 8 moles d'oxyde d'éthylène.

8. Inhibiteurs de corrosion pour puits de gaz et de pétrole selon la revendication 1 **caractérisés en ce que** lesdits alcools et glycols sont l'isopropanol, le n-butanol, l'éthylèneglycol, le propylèneglycol ou leurs mélanges.

9. Procédé d'inhibition de la corrosion en milieux aqueux dans des puits de gaz et de pétrole, **caractérisé en ce qu'**entre 5 et 300 ppm en poids des inhibiteurs de corrosion selon la revendication 1 sont utilisés.

10. Procédé d'inhibition de la corrosion en milieux aqueux dans des puits de gaz et de pétrole selon la revendication 9, en la présence de dioxyde de carbone.